# EUROPEAN PATENT SPECIFICATION

(11) **EP 0 668 145 B1**
(45) Date of publication and mention of the grant of the patent: **05.07.2000**
(21) Application number: 94102593.4
(22) Date of filing: 21.02.1994
(51) Int. Cl.: B29C 61/08, B29C 55/22, F16L 55/165

(54) **Method and apparatus for producing a plastic pipe and a plastic pipe**
Verfahren und Vorrichtung zum Herstellen eines Kunststoffrohres und Kunststoffrohr
Procédé et dispositif pour fabriquer un tube en matière plastique et tube ainsi fabriqué

(43) Date of publication of application: 23.08.1995
(73) Proprietor: Uponor Innovation AB, 513 81 Fristad (SE)
(72) Inventor: Järvenkylä, Jyri, F-15870 Hollola (FI); Lundquist, Yngve, S-73061 Virsbo (SE)
(74) Representative: Baronetzky, Klaus, Dipl.-Ing.

(56) References cited:
- EP-A- 0 252 749
- FR-A- 2 109 534
- GB-A- 1 310 915
- GB-A- 2 272 039
- PATENT ABSTRACTS OF JAPAN vol. 4, no. 92 (M-18) (574) 3 July 1980 & JP-A-55 049 218 (SUMITOMO DENKI KOGYO K.K.) 9 April 1980
- PATENT ABSTRACTS OF JAPAN vol. 5, no. 76 (M-69) (748) 20 May 1981 & JP-A-56 027 317 (SHOWA DENSEN DENRAN K.K.) 17 March 1981

## Description

This invention relates to a method for producing a plastic pipe having memory properties such that the diameter of the pipe increases on heating, the pipe being intended for use e.g. in the lining of pipe-lines, wherein plastic material is extruded and formed into a pipe in pipe forming means, and then passed into a mould where the pipe diameter is contracted. The invention also relates to an apparatus for producing a plastic pipe.

It is known to restore sewer pipes and other pipelines by lining a worn-out pipe by a plastic pipe. It is usually preferable that the outer surface of the lining pipe rests against the inner surface of the old restored pipe. In practice, it is nearly impossible to insert a lining pipe fulfilling this condition into an old pipe. Therefore, it is a known practice to contract the diameter of the plastic pipe used for lining before it is inserted into an old pipe. The contraction of the diameter of a cold pipe gives the pipe a memory property which allows the original pipe diameter to be restored by heating the pipe. The lining pipe can thus be inserted into the old pipe when it is in a contracted state, and when it is heated, it will expand to its original diameter. Thermoplastic pipes used for the purpose are usually made of polyethylene.

A plastic pipe is usually contracted by allowing a pipe produced in an extruder to cool and drawing it then through a conical contraction mould at a suitable stage. The severest drawback of this method known from the prior art is that the pipe has to be contracted in a separate step after the extrusion step, which increases the production costs. The method also requires large amounts of energy at the contraction step.

The document JP-A-55049218 discloses a method for making a heat recovery tube for lining of pipes. In order to avoid change in length of the tube at thermal expansion, the tube is corrugated. Documents GB-A-1310915 and JP-A-5627317 disclose methods for making a linig in the form of an extruded tube which is crosslinked and reduced in diameter by a drawing process.

The object of the present invention is to provide a method which enables the production of plastic pipes with permanent memory properties and which comprises no separate plastic pipe contraction step. The method according to the invention is disclosed in claim 1.

As a cross-linking reaction is caused to occur in the plastic material in the pipe forming means, and the hose formed of the cross-linked plastic material is contracted immediately after the pipe forming step, the plastic pipe so obtained in a single step expands during subsequent heating substantially to the diameter it had when the cross-linking took place. The energy consumption is also lower than in the prior art method, as the contraction of material in a plastic state into a smaller diameter requires less force than the contraction of a finished cold pipe.

To ensure that the memory property is strong enough, the cross-linking degree of the pipe materialshould be between 5% and 30%, preferably about 10%. The memory property of the pipe will be strengthened if the pipe is cooled when its diameter is being contracted.

The volume of the plastic material does not change during contraction, as a result of which the wall thickness of the pipe increases and/or the pipe gets longer as the pipe diameter is decreased. As the pipe gets correspondingly shorter when it is heated during lining, several drawbacks will result as the pipe length may decrease as much as 6% during heating. For instance, if the distance between adjacent wells in a sewer pipe is 100 metres and the pipe is lined with a pipe of equal length, the decrease in the length of the pipe may be 6 metres, as a result of which the connection of the lining pipe to the wells, for instance, will be considerably more difficult. To avoid this drawback, the plastic pipe can, as suggested in claim 7, be passed from the contraction mould into a corrugator for corrugating the pipe at least partially. As the pipe diameter increases on heating, the corrugation gets more gentle, which increases the length of the pipe. As the corrugation increases the pipe length and the pipe contraction decreases it, these opposite effects can be made equal so that the length of the lining pipe will remain unchanged during heating.

There are often holes in pipes in old pipeline systems, or holes may be formed after lining. If the pipeline carries a fluid under pressure, the wall thickness of the lining pipe has to be such that the lining pipe alone withstands the pressures prevailing in the pipe. According to an alternative to increasing the wall thickness is to surround a finished pipe with a hose-like fabric being substantially inelastic at a diameter equal to the outer diameter of the pipe after heating. In most cases, the use of such a fabric is clearly cheaper than increasing the wall thickness.

The invention also relates to an apparatus for producing a plastic pipe having memory properties such that the diameter of the pipe increases when the pipe is heated, the pipe being intended for use in the lining of pipelines, for instance. The apparatus comprises pipe forming means for forming extruded plastic material into a pipe and a mould for contracting the diameter of the pipe.

The apparatus according to the invention is characterized in that the contraction mould is positioned in the immediate vicinity of the pipe forming means; and that a corrugator is provided after the contraction mould for corrugating the plastic pipe at least partially.

As the contraction mould is positioned immediately after the pipe forming means, the plastic pipe emerging from the contraction mould is still in a plastic state to such an extent that it can be corrugated in a corrugator positioned after the contraction mould.

Corrugation allows the shortening of the pipe during heating to be compensated in a simple way, so that the length of the pipe remains unchanged during lining.

In the following, the invention will be described with reference to the attached drawings, in which
Figure 1 is a general vertical sectional view of an apparatus according to the invention; and
Figure 2 is a longitudinal sectional view of a section of a pipe according to the invention.

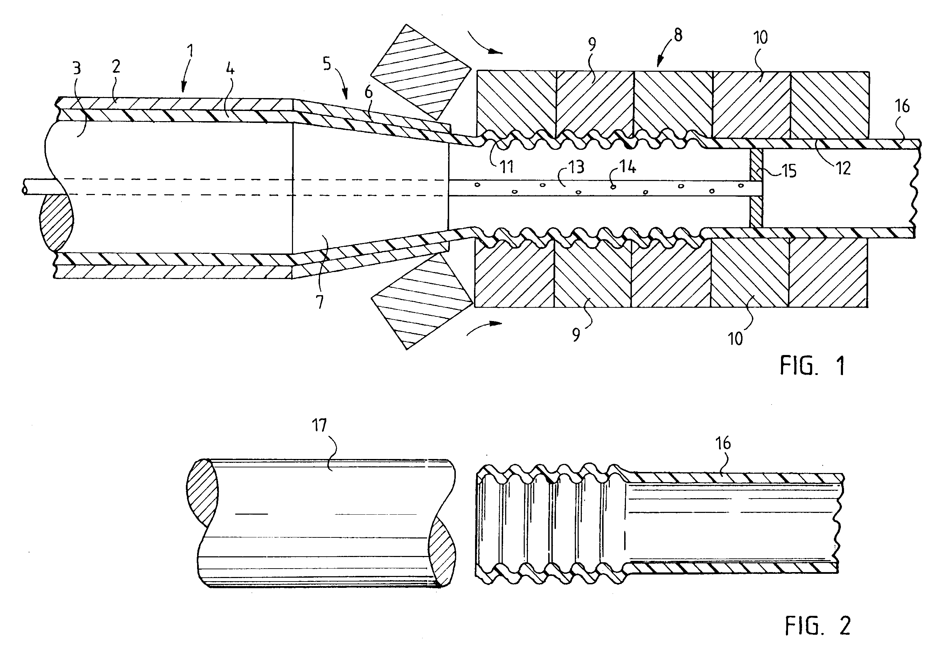

Figure 1 shows pipe forming means 1 connected to an extruder not shown. The pipe forming means comprise an outer tubular mould 2 and a cylindrical core 3

positioned concentrically within the mould 2. Plastic material emerging from the extruder is indicated with the reference numeral 4. The apparatus also comprises a pipe contraction mould 5 having an outer tube 6 and an inner contraction core 7 having the shape of a truncated cone. The outer tube 6 of the contraction mould 5 is also conical. The parts 6 and 7 taper in the production direction of the apparatus, as a result of which the diameter of a plastic pipe positioned between them decreases in a direction away from the pipe forming means 1.

A plastic pipe corrugator 8 is positioned after the contraction mould 5. It comprises successive chill moulds 9 and 10 semi-circular in shape in a manner such that they form a closed mould space around the plastic pipe for shaping it. The chill moulds 9, 10 move around along two endless paths in a manner such that when they are positioned around the pipe, they move in the pipe production direction, from the left to the right in Figure 1. The chill moulds 9 have a wave-shaped inner surface 11, and the chill moulds 10 have a smooth inner surface 12. A tube 13 is provided on the central line of the apparatus, having openings 14 over a section positioned after the contraction core 7. A round plate 15 acting as a plug within the plastic pipe is attached to the rear end of the tube 13. The finished plastic pipe is indicated with the reference numeral 16.

According to the invention the pipe contraction mould 5 is positioned substantially immediately after the pipe forming means 1 as seen in the direction of movement of the plastic pipe. In addition, the corrugator 8 is positioned after the contraction mould 5 close to it, as defined in claim 7.

The apparatus shown in Figure 1 operates in the following way. A substance causing a cross-linking reaction to occur in the plastic material when the material is in the pipe forming means 1 is added to the plastic material in the extruder or before it. This substance may be e.g. peroxide. A suitable crosslinking degree is between 5% and 30%, preferably about 10%, in the pipe forming means 1. Plastic material 4 fed from the extruder in a plastic state passes through the pipe forming means 1 between the outer tube 2 and the core 3, under the influence of which the material is formed into a smooth-walled pipe. At the same time the above-mentioned cross-linking reaction takes place in the pipe. In most cases the cross-linking reaction is not completed when the pipe is in the pipe forming means, but it goes on also in the contraction mould 5 or even in the corrugator 8.

From the pipe forming means the plastic material, still hot, is passed into the contraction mould 5, where the pipe diameter is reduced. From the contraction mould 5, the pipe, which is still in a plastic state, is passed into the corrugator 8, where the pipe wall is pressed against the inner surface of the chill moulds by means of a pressurized gas flowing through the holes 14 of the tube 13. The plug 15 prevents the gas from escaping from within the pipe. As appears from Figure 1, the inner surfaces of the chill moulds 9 are wave-shaped, such as sine-shaped, whereas the inner surfaces of the chill moulds 10 are planar, as a result of which the finished pipe 16 will be corrugated over a portion of its length whereas it is otherwise smooth, see Figure 2.

The contraction mould 5 may be provided with means not shown for cooling the pipe to some extent. All of the chill moulds of the corrugator 8 may be similar to the chill moulds 9, so that the pipe will be corrugated over its entire length.

In the method according to the invention the corrugator 8 may be omitted so that smooth pipe only is produced. This method does not offer a solution to the problem associated with the shortening of the pipe in lining, whereas it produces a cross-linked plastic pipe, such as a polyolefin pipe, having a memory property with respect to the diameter in a simple low-energy manner.

According to one embodiment of the invention, the pipe 16 may be surrounded by a hose-like fabric 17 which may be elastic up to a diameter corresponding to the outer diameter of the pipe after the pipe has expanded as a result of the heating associated with the lining procedure, whereas it is inelastic at this diameter. The fabric may thus be fitted tightly around the pipe at the pipe manufacturing stage, and when the pipe diameter increases on heating, it stretches up to a desired diameter. When the fabric is used, the wall thickness of the plastic pipe can be kept smaller than what is possible in pipes where no such fabric is used. If desired the fabric may be protected by a plastic coating applied upon the fabric after corrugation.

The invention enables production of a plastic pipe having a memory property such that the pipe diameter increases on heating, and being corrugated at least over a portion of its length. An advantage of such a pipe is that its corrugation compensates for the shortening of the pipe on heating so that the total length of the pipe can be kept unchanged. This kind of pipe can be produced by the apparatus shown in Figure 1. The length of the corrugated section of the pipe with respect to the total length of the pipe depends on the contraction degree of the pipe and the wave shape of the corrugation. In most cases, it is preferable that 10 to 50%, preferably about 30%, of the length of the pipe is corrugated.

A partially or entirely corrugated, cross-linked plastic pipe may also be inserted into an uncorrugated outer pipe preferably made of metal, such as steel. Such a pipe element may be used e.g. for hot water pipelines in buildings. A preferably gently corrugated plastic pipe is thereby prestressed by causing a desired longitudinal deformation to take place, whereafter the prestressed plastic pipe is attached at the ends to the outer pipe. The prestressing of the inner pipe reduces forces created in the axial direction of the pipe by temperature changes, and the corrugation of the inner pipe compensates for elongation or contraction caused by temperature changes.

The invention is not limited to the embodiments described by way of example above, but may vary within the scope of the attached claims. Accordingly, the cross-linking degree of the plastic material 4 may be considerably over 5% in the pipe forming means 1. The contraction mould may also extend within the corrugator, and in place of an internal overpressure, the plastic pipe may be pressed in the corrugator against the inner wall of the chill moulds by means of a vacuum acting from outside the pipe. The inner surface 11 of the chill moulds 9 could also have other shapes than the wave-shape mentioned above. Some moulds could be without grooves, and said surface could have corrugating grooves at long, regular or irregular, distances from each other.

## Claims

1. Method for producing a plastic pipe having memory properties such that the diameter of the pipe increases on heating, wherein plastic material (4) is extruded and formed into a pipe in pipe forming means (1), and a cross-linking reaction is caused to take place in the plastic material (4) when the material is in the pipe forming means (1), **characterized** in that the pipe is passed from the pipe forming means (1) into a contraction mould (5) where the pipe is contracted when it is still in a plastic state.

2. Method according to claim 1, **characterized** in that the cross-linking degree of the plastic pipe (16) emerging from the pipe forming means (1) is between 5% and 30%, preferably about 10%.

3. Method according to claim 1, **characterized** in that the pipe (16) is passed into the contraction mould (5) immediately after it has emerged from the pipe forming means (1).

4. Method according to claim 1, **characterized** in that the plastic pipe is cooled in the contraction mould (5).

5. Method according to claim 1, **characterized** in that the plastic pipe is passed from the contraction mould (5) into a corrugator (8) for corrugating the pipe at least partially.

6. Method according to claim 1 or 5, **characterized** in that a hose-like fabric (17) is positioned around the finished pipe, the fabric being essentially inelastic at a diameter corresponding to the outer diameter of the pipe (16) after the pipe has been heated.

7. Apparatus for producing a plastic pipe having memory properties such that the diameter of the pipe increases on heating, the apparatus comprising pipe forming means (1) for forming extruded plastic material (4) into a pipe (16), and a corrugator (8) for corrugating the plastic pipe (16) at least partially, **characterized** by a mould (5) for contracting the diameter of the pipe and provided in the immediate vicinity of the pipe forming means (1).

8. Apparatus according to claim 7, **characterized** in that the contraction mould (5) has means for cooling the pipe.

## Patentansprüche

1. Verfahren zur Herstellung eines Kunststoffrohrs, welches Formerinnerungseigenschaften aufweist, so daß sich der Durchmesser des Rohrs bei Erwärmung vergrößert, wobei Kunststoff (4) extrudiert und in einer Rohr-Formungsvorrichtung (1) zu einem Rohr geformt wird, und eine Vernetzungsreaktion ausgelöst wird, welche im Kunststoff (4) abläuft, sobald sich der Werkstoff in der Rohr-Formungsvorrichtung (1) befindet, dadurch gekennzeichnet, daß das Rohr von der Rohr-Formungsvorrichtung (1) in eine Kontraktionsform (5) gelangt, in welcher es noch in plastischem Zustand in seinen Abmessungen verringert wird.

2. Verfahren nach Anspruch 1, dadurch gekennzeichnet, daß der Vernetzungsgrad des Kunststoffrohrs (16), welches in der Rohr-Formungsvorrichtung (1) hergestellt wird, zwischen 5% und 30%, vorzugsweise in etwa 10% beträgt.

3. Verfahren nach Anspruch 1, dadurch gekennzeichnet, daß das Rohr (16) unmittelbar nach seiner Herstellung in der RohrFormungsvorrichtung (1) in die Kontraktionsform (5) gelangt.

4. Verfahren nach Anspruch 1, dadurch gekennzeichnet, daß das Kunststoffrohr in der Kontraktionsform (5) gekühlt wird.

5. Verfahren nach Anspruch 1, dadurch gekennzeichnet, daß das Kunststoffrohr von der Kontraktionsform (5) in eine Wellvorrichtung (8) für das zumindest teilweise Wellen des Rohrs transportiert wird.

6. Verfahren nach Anspruch 1 oder 5, dadurch gekennzeichnet, daß ein Gewebe (17) ähnlich der Form eines Schlauches um das fertige Rohr angeordnet wird, wobei das Gewebe bei einem Durchmesser, der dem Außendurchmesser des Rohrs (16) nach der Erwärmung des Rohrs entspricht, im wesentlichen unelastisch ist.

7. Vorrichtung zur Herstellung eines Kunststoffrohrs, welches Formerinnerungseigenschaft aufweist, so daß sich der Durchmesser des Rohrs bei Erwärmung vergrößert, wobei die Vorrichtung eine Rohr-Formungsvorrichtung (1) für die Formung des extrudierten Kunststoffs (4) in ein Rohr (16) aufweist, und eine Wellvorrichtung (8) für das zumindest teilweise Wellen des Kunststoffrohrs (16), dadurch gekennzeichnet, daß die Vorrichtung eine Form (5) zur Reduzierung des Rohrumfangs aufweist und in unmittelbarer Nähe zur Rohr-Formungsvorrichtung (1) angeordnet ist.

8. Vorrichtung nach Anspruch 1, dadurch gekennzeichnet, daß die Kontraktionsform (5) Vorrichtungen zum Kühlen des Rohrs aufweist.

## Revendications

1. Procédé pour produire un tuyau en matière plastique ayant des propriétés de mémoire de telle sorte que le diamètre du tuyau augmente lors d'un chauffage, dans lequel la matière plastique (4) est extrudée et formée en un tuyau dans des moyens de formage de tuyau (1) et qu'une réaction de réticulation est provoquée dans la matière plastique (4) lorsque la matière est dans les moyens de formage de tuyau (1), caractérisé en ce que le tuyau est envoyé depuis les moyens de formage de tuyau (1) jusqu'à l'intérieur d'un moule de contraction (5) où le tuyau est contracté lorsqu'il est encore dans un état plastique.

2. Procédé selon la revendication 1, caractérisé en ce que le degré de réticulation du tuyau en matière plastique (16) sortant des moyens de formage de tuyau (1) est compris entre 5 % et 30 %, de préférence d'environ 10 %.

3. Procédé selon la revendication 1, caractérisé en ce que le tuyau (16) est envoyé dans le moule de contraction (5) immédiatement après qu'il soit sorti des moyens de formage de tuyau (1).

4. Procédé selon la revendication 1, caractérisé en ce que le tuyau de matière plastique est refroidi dans le moule de contraction (5).

5. Procédé selon la revendication 1, caractérisé en ce que le tuyau de matière plastique est envoyé depuis le moule de contraction (5) dans un dispositif à onduler (8) destiné à onduler au moins partiellement le tuyau.

6. Procédé selon la revendication 1 ou 5, caractérisé en ce qu'un tissu analogue à un tuyau souple (17) est positionné autour du tuyau fini, le tissu n'étant pratiquement pas élastique à un diamètre correspondant au diamètre extérieur du tuyau (16) existant après que le tuyau a été chauffé.

7. Dispositif pour produire un tuyau de matière plastique ayant des propriétés de mémoire de telle sorte que le diamètre du tuyau augmente lors d'un chauffage, le dispositif comportant des moyens de formage de tuyau (1) pour former une matière plastique extrudée (4) en un tuyau (16), et un dispositif à onduler au moins partiellement (8) destiné à onduler le tuyau de matière plastique (16), caractérisé en ce qu'il comporte un moule (5) pour contracter le diamètre du tuyau, agencé au voisinage immédiat des moyens de formage de tuyau (1).

8. Dispositif selon la revendication 7, caractérisé en ce que le moule de contraction (5) a des moyens pour refroidir le tuyau.
